# EUROPEAN PATENT SPECIFICATION

(11) **EP 0 519 908 B1**
(45) Date of publication and mention of the grant of the patent: **01.03.1995**
(21) Application number: 89911121.5
(22) Date of filing: 25.09.1989
(51) Int. Cl.: A01B 73/02, A01B 29/00

(54) **AGRICULTURAL ROLLER**
LANDWIRTSCHAFTSROLLE
ROULEAU AGRICOLE

(43) Date of publication of application: 30.12.1992
(73) Proprietor: STARK, Crister, S-590 21 Väderstad (SE)
(72) Inventor: STARK, Crister, S-590 21 Väderstad (SE)
(74) Representative: Lettström, Richard Wilhelm
(86) International application number: SE8900514
(87) International publication number: WO9103922

(56) References cited:
- WO-A-88/04134
- SE-A-88 017 579
- US-A- 3 502 154
- US-A- 3 529 674
- US-A-33 738 22

## Description

The present invention relates to an improved agricultural roller of the kind which comprises a plurality of roller-sections which are mutually connected with the aid of pivot devices and each of which has a section-frame and a pack of roller rings rotatably connected to said section-frame, and which roller further comprises transport wheels which when the roller is located in its operative rolling position are free from the ground and which are arranged to be lowered against the ground and to lift the roller to a transport position free from the ground upon appropriate activation of a hydraulic piston-cylinder device, and also comprise a tow-bar by means of which the roller can be towed behind a towing vehicle, e.g. a tractor. When the roller is in its transport position, in which the transport wheels support and carry the roller and ancillary roller-devices in a position raised from the ground, roller-sections can be swung towards one another, so as to decrease the transport-width of the roller.

Rollers of this kind with which the transport wheels are moved between an operative working position and a transport position with the aid of a hydraulic unit are known to the art, e.g. from Swedish Patent Specification No. 7704263-8. The construction of agricultural rollers of this kind has been greatly simplified in recent years, with movement of the roller and transport wheels between said positions being accomplished with the aid of one single hydraulic piston-cylinder device. One such roller, according to the pre-characterising portion of claim 1, is described in Swedish Patent Application No. 8605233-9, corresponding to WO 88/04134.

This roller comprises a main roller-section and at least two side roller-sections, whereby said side roller-sections closest to said main roller-section carry transport wheels which in the working position of the roller are situated with their axis vertically directed, whereby rain water can pour into the rim or the hub of the wheel, which therefore must be provided with holes or recesses for the flow off of water from the rim. Furthermore, the wheels must have a large toe-in angle forcing the sections together when driving in the transport position. Such a large toe-in angle causes that the wheels are subjected to a greater wear. Finally, the track gauge of the roller is rather large, which makes transport on uneven grounds more difficult. The agriculture roller can only be moved to the working position/transport position by combining it with driving the tractor backwards/forwards.

However, there is still room for further development and further simplification in this known type of roller construction, among other things with respect to the adjustment of the roller between its working and transport positions. In the case of the roller construction described in the aforesaid Swedish Patent Application, it is necessary to drive the towing tractor forwards when moving the roller from its working position to its transport position, and, conversely, to drive the tractor rearwards when moving the roller from its transport position to its working position. Consequently, when practicing this known method, it is necessary to have free space in front of and behind the roller-tractor combination when lowering and raising the roller respectively.

This drawback is avoided and a further simplified and less-expensive construction is provided by the present invention, in that one of the roller-sections, the main-roller section, has a frame to which there is rigidly connected a first arm which is provided at its free end with a pivot device for pivotal connection of a tow-bar to said one section-frame. Also rigidly connected to the aforesaid one section-frame is a second arm which is provided with a pivot device for driving connection with one end of a piston-cylinder device, said device also being connected pivotally to a pivot device mounted on the tow-bar. The aforesaid one section-frame also has rigidly connected thereto arms which carry the transport wheels of the roller construction. The arrangement is such that when the roller is moved from its working position to its transport position, by commensurate activation of the hydraulic piston-cylinder device, the roller-sections will be moved through an angle of 90° in two stages, and such that during the first of these stages the shaft carrying the roller-pack of the main roller-section will function as a pivot shaft up to the time at which the transport wheels are brought into supportive engagement with the ground, whereas during the second stage of said movement the shafts of the transport wheels will function as a pivot shaft until the roller has been swung to its transport position, and vice versa.

According to a second embodiment of the invention, side roller-sections located on one side of the main roller-section extend in the same direction as the wheel-carrying arms when the roller is in its transport position.

In accordance with a third embodiment of the invention, the length of the wheel-carrying arms is approximately half the length of the side roller sections.

In accordance with a fourth embodiment, pivot device located between the roller-sections are mounted such that the axes of said devices will extend substantially horizontally in the working position of the roller and substantially vertically in the transport position of said roller.

In accordance with a fifth embodiment, there is provided adjacent each pivot device between respective roller-sections a latching device which functions to lock the side roller-sections and the main roller-section together in the transport position of the roller.

In accordance with a sixth embodiment, the hydraulic piston-cylinder device functions to position the pivot devices located between the centre roller-section and the respective side roller sections in a manner such that the pivot axes of said pivot devices will deviate slightly from the vertical plane in one direction or the other relative to plane, so as to facilitate swinging of the roller-sections from the transport position to the working position, and vice versa.

When the roller is moved between its working and transport positions, the roller is lifted from the ground such that the pivot devices located between the side-roller sections and main roller section will be brought to a position in which the side roller-sections can be swung to and from their respective transport positions without touching the ground when the roller is stationary. This movement of the roller-sections requires no additional space for forward or rearward driving of the tractor, since the roller-sections can be moved with the tractor and roller stationary.

The invention will now be described in more detail with reference to the accompanying drawings, which illustrates a roller construction comprising three roller-sections and in which
Figure 1 is a perspective view of an inventive roller in its working position, said roller being shown from one side and obliquely from behind;
Figure 2 is a perspective view of the roller in its transport position, said roller being shown obliquely from behind;
Figure 3 illustrates the roller schematically in its working position, from one side of the roller;
Figure 4 illustrates the roller of Figure 3 in an intermediate position during adjustment of the roller from its working to its transport position;
Figure 5 illustrates the roller adjusted to its transport position;
Figure 6 illustrates the roller of Figure 5 from above;
Figure 7 illustrates the roller when the side roller-sections have been swung part way from the working position to the transport position; and
Figure 8 illustrates the roller with respective roller-sections in their transport position.

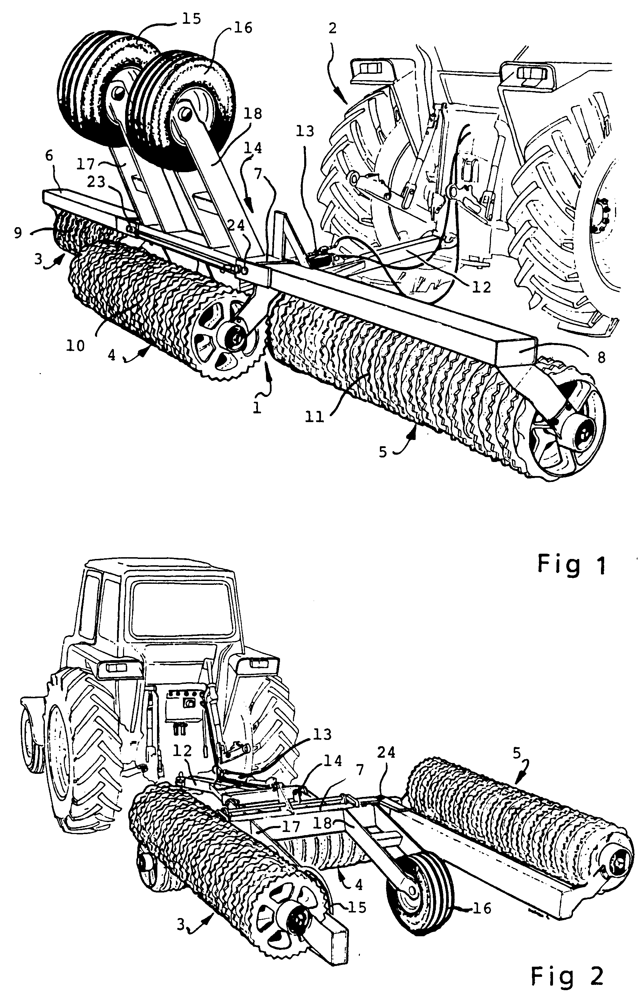

Figure 1, illustrates an agricultural roller construction which is towed by a tractor 2 and which includes a roller generally shown at 1. The illustrated roller comprises three roller-sections 3, 4 and 5, arranged side-by-side and provided with respective frames 6, 7 and 8. Each of the roller-section frames carries a respective roller pack 9, 10 and 11 provided with rotatable roller rings. A tow-bar 12 is pivotally connected to the section-frame 7 of the centre roller-section, i.e. the main roller-section 4. The ends of a piston-cylinder device 13, e.g. a hydraulic device, are pivotally connected to the tow-bar 12 and to the main-section-frame 7 respectively, said tow-bar and frame 7 being caused to pivot relatively to one another about a pivot device 14, when the piston of the piston-cylinder device 13 is extended or retracted during a manoeuvring operation.

The roller construction illustrated in Figure 1 also includes two transport wheels 15 and 16, which are rotatably journaled on one end of respective carrier arms 17 and 18. The other ends of the carrier arms 17, 18 are rigidly connected to the frame 7 of the main roller-section 4, e.g. as by welding. The roller-sections of the Figure 1 illustration are shown in their working positions, and the transport wheels 15, 16 are hence free from the ground.

Figure 2 illustrates the roller construction in its transport mode, with the roller-sections 3-5 raised from the ground and supported on the transport wheels 15, 16. Part of the weight of the roller is supported by the towing-hook or eye of the tractor, at the forward end of the tow-bar 12. It will be seen from the Figure that by adapting the length of the carrier arms 17, 18, the transport wheels 15, 16 can be arranged in relation to the centre of gravity of the collapsed roller such that an appropriate load will rest on the towing-hook of the tractor.

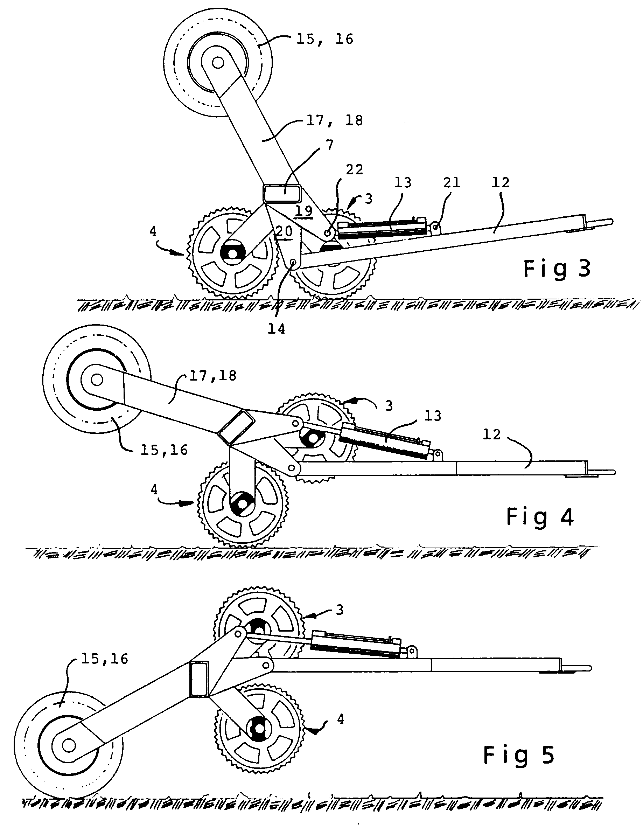

The components illustrated in Figure 3 are identified with the same reference numerals used in Figures 1 and 2. The outer end of an arm 19 welded to the main-section frame 7 has mounted thereon a pivot device 22 for connection to one end of the piston of the hydraulic piston-cylinder device 13. The end of the piston-cylinder device remote from the arm 19 is connected to a pivot device 21 welded to the tow-bar 12. Also welded to the main-section frame 7 is an arm 20, which carries on its outer end the afore-described pivot device 14 connected to the tow-bar 12.

In the Figure 4 illustration, the piston rod of the piston-cylinder device 13 is shown extended from the cylinder of said device. With the piston rod in this position, the roller is raised slightly from its working position; the roller section 3 (and also the roller section 5 not shown in this Figure) has been lifted from the ground by pivoting on the shaft of the roller-pack 10 of the main roller-section 4. In the position of the roller illustrated in Figure 4, the transport wheels 15, 16 are in the process of moving down towards the ground.

Figure 5 illustrates a position of the roller in which the piston rod of the hydraulic piston-cylinder device 13 has been extended to its outer terminal position and the main roller-section 4 has been lifted from the ground.

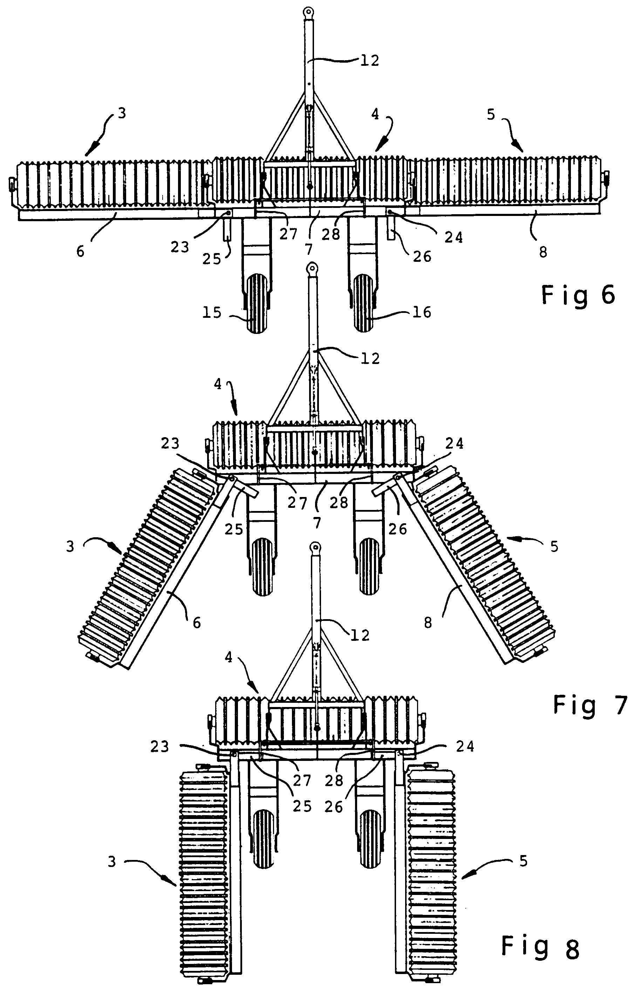

Figure 6 illustrates the roller of Figure 5 from above. The roller-sections 3, 5 remain in their laterally extending positions. The reference 23 identifies a pivot device located between the roller-sections 3 and 4, whereas the reference 24 identifies a corresponding pivot device between the roller-sections 4 and 5. The reference 25 and 26 identify latching tongues which are welded rigidly to respective section frames 6 and 8.

Figure 7 illustrates the roller-sections 3 and 4 swung inwardly towards one another, about the pivot devices 23 and 24. When the pivot devices are adjusted positionally such that the axes of the pivot devices 23, 24 are brought to a vertical position, it is only necessary to overcome the friction in the pivot devices in order to effect swinging of the roller sections 3, 5 to their respective positions. By inclining the axes of said devices slightly rearwardly, the roller-sections will tend to swing towards one another "under their own initiative" therewith greatly facilitating this swinging or pivotal movement of the roller sections. Correspondingly, the pivot axes can be inclined slightly forwards when pivoting the roller-sections in the opposite direction, i.e. from their transport to their working positions.

Figure 8 illustrates the roller when collapsed to its transport position, in which the roller sections 3 and 5 extend rearwardly. In this position of the roller, the latching tongues 25, 26 have been moved in behind latching teeth on latching-hook means 27 and 28 respectively, so as to prevent the roller-sections 3, 5 from being swung outwards during transportation of the roller.

Subsequent to having transported the roller to a new working site, adjustment of the roller from its transport position to its working position is effected in the reverse order to that described above.

## Claims

1. An agricultural roller comprising a central main section (4) including a main section frame (7), and a main pack (10) of roller rings rotatably connected to said main sections frame; two side sections (3, 5) arranged on each side of and connected to said main section, each side section including a side section frame (6, 8) and a side pack (9, 11) of roller rings rotatably connected to respective section frame, said sections being mutually connected to each other by means of pivot devices (22, 24); a hydraulic piston-cylinder device (13); two transport wheels (15, 16) which are free from the ground in the working position of the roller and are arranged to be lowered on to the ground and lift the roller free from the ground in the transport position of said roller, by activation of said hydraulic piston-cylinder device (13); an arm (20), which is rigidly connected to said main section frame (7); and a tow-bar (12) connected to said arm (20) via a pivot device (14), such as to enable the roller to be towed by a towing vehicle (2), said main section-frame (7) including a first arm (19) which is rigidly connected thereto and which has provided thereon a pivot device (22) for driving connection to said hydraulic piston-cylinder device (13), said piston-cylinder device also being pivotally connected to a pivot device (21) on said tow-bar, **characterized** in that the two transport wheels (15,16) are carried on carrier arms (17,18) rigidly connected to said main-section frame (7) of said main roller-section (4), the arrangement being such that appropriate activation of the hydraulic piston-cylinder device (13) will move the roller from its working position to its transport position, by swinging said roller sections (3-5) through approximately 90° in two stages about a shaft which extends at right angles to the working and transport direction of the roller, wherein during the first stage of said movement the shaft of the roller-packs (10) of the main roller-section (4) forms the pivot shaft until the transport wheels (15,16) have been brought into supportive contact with the ground, whereas during the second stage of said movement the shaft of the transport wheels (15,16) form pivot shafts while the roller-packs of said roller are swung free from the ground and to their transport position and vice versa.

2. Roller according to Claim 1, **characterised** in that side roller-sections (3, 5) located on respective sides of the main roller-section (4) extend in the same direction as the transport wheel carrier arms (17,18) in the transport position of the roller.

3. Roller according to Claim 2, **characterised** in that the length of the transport-wheel carrier arms (17,18) is approximately half the length of the side roller-sections (3, 5).

4. Roller according to Claim 1, **characterised** in that the pivot axes of the pivot devices (23, 24) located between respective roller-sections (3,4 and 4,5, respectively) extend substantially horizontally in the working position of the roller and substantially vertically in the transport position of said roller.

5. Roller according to Claim 2, **characterised** in that latching devices (25/27, 26/28) are mounted adjacent each pivot device (23, 24) between said roller sections (3,4 and 4,5, respectively), said latching devices functioning to lock the side roller-sections (3,5) of the roller to the main roller-section (4) in the roller transport position.

6. Roller according to Claim 1, **characterised** in that the hydraulic piston-cylinder device (13) is operative to position the pivot devices (23, 24) located between said main roller-section (4) and said side roller-sections (3,5) in a manner such that the pivot axes of the pivot devices will deviate slightly from the vertical plane to one or the other side of said plane, such as to facilitate swinging of the roller-sections from their transport position to their working position, and vice versa.

## Patentansprüche

1. Walze für landwirtschaftliche Zwecke mit einem mittleren Hauptabschnitt (4), der einen Hauptabschnittsrahmen (7) und eine Hauptgruppe (10) von drehbar mit dem Hauptabschnittsrahmen verbundenen Walzringen aufweist; mit zwei auf jeder Seite des Hauptabschnitts angeordneten und damit verbundenen Seitenabschnitten (3, 5), von denen jeder einen Seitenabschnittsrahmen (6, 8) und eine Seitengruppe (9, 11) von drehbar mit den jeweiligen Abschnittsrahmen verbundenen Walzringen aufweist, wobei die Abschnitte miteinander durch Schwenkeinrichtungen (22, 24) verbunden sind; mit einer hydraulischen Kolbenzylindereinrichtung (13); mit zwei Transporträdern (15, 16), die in der Arbeitsstellung der Walze keine Bodenberührung haben und so angeordnet sind, daß sie auf den Boden abgesenkt werden, und die die Walze durch Aktivierung der hydraulischen Kolbenzylindereinrichtung (13) in der Transportstellung der Walze vom Boden abheben; mit einem starr mit dem Hauptabschnittsrahmen (7) verbundenen Arm (20) und mit einer Zugstange (12), die über eine Schwenkeinrichtung (14) mit dem Arm (20) verbunden ist, um ein Ziehen der Walze durch ein Zugfahrzeug (2) zu ermöglichen, wobei der Hauptabschnittsrahmen (7) einen ersten Arm (19) aufweist, der starr mit ihm verbunden ist und an dem eine Schwenkeinrichtung (22) für eine Antriebsverbindung mit der hydraulischen Kolbenzylindereinrichtung (13) vorgesehen ist, wobei die Kolbenzylindereinrichtung auch schwenkbar mit einer Schwenkeinrichtung (21) auf der Zugstange verbunden ist, dadurch gekennzeichnet, daß die beiden Transporträder (15, 16) auf starr mit dem Hauptabschnittsrahmen (7) des Hauptwalzenabschnitts (4) verbundenen Tragarmen (17, 18) getragen werden, wobei die Anordnung derart gestaltet ist, daß eine geeignete Aktivierung der hydraulischen Kolbenzylindereinrichtung (13) die Walze aus ihrer Arbeitsstellung in ihre Transportstellung bewegt, indem die Walzenabschnitte (3 bis 5) in zwei Stufen um etwa 90° um eine Welle verschwenkt werden, welche sich in rechten Winkeln zu der Arbeits- und Transportrichtung der Walze erstreckt, wobei während der ersten Stufe der Bewegung die Welle der Walzengruppen (10) des Hauptwalzenabschnitts (4) die Drehachse bildet, bis die Transporträder (15, 16) in tragenden Kontakt mit dem Boden gebracht worden sind, wohingegen bei der zweiten Stufe der Bewegung die Welle der Transporträder (15, 16) Drehachsen bildet, während die Walzengruppen der Walze vom Boden frei und in ihre Transportstellung geschwenkt werden und umgekehrt.

2. Walze nach Anspruch 1, dadurch gekennzeichnet, daß auf den jeweiligen Seiten des Hauptwalzenabschnitts (4) angeordnete seitliche Walzenabschnitte (3, 5) sich in der Transportstellung der Walze in dieselbe Richtung erstrecken wie die Transportrad-Tragarme (17, 18).

3. Walze nach Anspruch 2, dadurch gekennzeichnet, daß die Länge der Transportrad-Tragarme (17, 18) etwa die Hälfte der Länge der seitlichen Walzenabschnitte (3, 5) beträgt.

4. Walze nach Anspruch 1, dadurch gekennzeichnet, daß die Schwenkachsen der zwischen den jeweiligen Walzenabschnitten (3, 4 bzw. 4, 5) angeordneten Schwenkeinrichtungen (23, 24) sich in der Arbeitsstellung der Walze im wesentlichen horizontal und in der Transportstellung der Walze im wesentlichen vertikal erstrecken.

5. Walze nach Anspruch 2, dadurch gekennzeichnet, daß angrenzend an jede zwischen den Walzenabschnitten (3,4 bzw. 4,5) befindliche Schwenkeinrichtung (23, 24) Verriegelungseinrichtungen (25/27, 26/28) aufgebracht sind, welche so wirken, daß in der Transportstellung der Walze eine Arretierung der seitlichen Walzenabschnitte (3, 5) der Walze an dem Hauptwalzenabschnitt (4) erfolgt.

6. Walze nach Anspruch 1, dadurch gekennzeichnet, daß die hydraulische Kolbenzylindereinrichtung (13) eine derartige Positionierung der zwischen dem Hauptwalzenabschnitt (4) und den seitlichen Walzenabschnitten (3, 5) angeordneten Schwenkeinrichtungen (23, 24) bewirkt, daß die Schwenkachsen der Schwenkeinrichtungen von der vertikalen Ebene geringfügig auf die eine oder die andere Seite der Ebene abweichen, um ein Schwenken der Walzenabschnitte aus ihrer Transportstellung in ihre Arbeitsstellung und umgekehrt zu erleichtern.

## Revendications

1. Un rouleau agricole, comprenant une section principale centrale (4) contenant un châssis de section principale (7), et un jeu principal (10) d'anneaux de rouleau, relié, de façon à pouvoir tourner, audit châssis de section principale; deux sections latérales (3, 5) disposées de chaque côté de, et reliées à, ladite section principale, chaque section latérale comprenant un châssis de section latérale (6, 8) et un jeu latéral (9, 11) d'anneaux de rouleau, monté à rotation sur le châssis de section respectif, lesdites sections étant mutuellement reliées les unes aux autres au moyen de dispositifs de pivotement (22, 24); un dispositif à piston et cylindre hydraulique (13); deux roues de transport (15, 16), relevées du sol lorsque le rouleau se trouve en position de travail et agencées pour être abaissé au sol et relever le rouleau pour le dégager du sol lorsque ledit rouleau se trouve en position de transport; par actionnement du disposition à piston et cylindre hydraulique (13); un bras (20), relié rigidement audit châssis de section principale (7); et une barre d'attelage-remorquage (12), reliée audit bras (20) par l'intermédiaire d'un dispositif pivot (16), de façon à permettre au rouleau d'être remorqué par un véhicule remorqueur (2), ladite section de châssis principale (7) comprenant un premier bras (19), lui étant relié rigidement et ayant monté, sur lui, un dispositif pivot (22) pour la liaison d'entraînement audit dispositif à piston et cylindre hydraulique (13), ledit dispositif à piston et cylindre étant également relié à pivotement à un dispositif pivot (21) monté sur ladite barre d'attelage-remorquage, caractérisé en ce que les deux roues de transport (15, 16) sont portées sur des bras supports (17, 18) reliés rigidement audit châssis de section principale (7) de ladite section de rouleau principale (4), l'agencement étant tel qu'un actionnement approprié du dispositif à piston et cylindre hydraulique (13) va déplacer le rouleau pour le passer de sa position de travail à sa position de transport, par basculement desdites sections de rouleau (3 à 5) d'à peu près 90°, en deux phases, autour d'un arbre s'étendant à angle droit par rapport aux directions de travail et de transport de rouleau, dans lequel, pendant la première phase dudit déplacement l'arbre des jeux de rouleau (10) de la section de rouleau principal (4) constitue l'arbre de pivotement, jusqu'à ce que les roues de transport (15, 16) aient été placées en contact de support avec le sol, tandis que, durant la deuxième phase dudit déplacement, l'arbre des roues de transport (15, 16) constitue des arbres de pivotement, tandis que les jeux de rouleau dudit rouleau sont basculés pour les écarter du sol et les passer à leur position de transport et inversement.

2. Rouleau selon la revendication 1, caractérisé en ce que les sections de rouleau latérales (3,5) situées sur les cotés respectifs de la section de rouleau principale (4) s'étendent dans la même direction que les bras supports de roues de transport (17, 18) lorsque le rouleau est en position de transport.

3. Rouleau selon la revendication 2, caractérisé en ce que la longueur des bras supports des roues de transport (17, 18) est d'à peu près la moitié de la longueur des sections de rouleau latérales (3 à 5).

4. Rouleau selon la revendication 1, caractérisé en ce que les axes de pivotement des dispositifs pivots (23, 24) placés entre les sections de rouleau (3, 4 et 4, 5 respectivement) respectives s'étendent sensiblement horizontalement, dans la position de travail du rouleau, et sensiblement verticalement, dans la position de transport dudit rouleau.

5. Rouleau selon la revendication 2, caractérisé en ce que des dispositifs de verrouillage (25/27, 26/28) sont montés adjacents à chaque dispositif pivot (23, 24), entre lesdites sections de rouleau (3, 4 et 4, 5 respectivement) lesdits dispositifs de verrouillage fonctionnant pour verrouiller les sections de rouleau latérales (3, 5) du rouleau sur la section de rouleau principale (4) lorsque le rouleau est en position de transport.

6. Rouleau selon la revendication 1, caractérisé en ce que le dispositif à piston et cylindre hydraulique (13) fonctionne pour positionner les dispositifs pivots (23, 24) situés entre ladite section de rouleau principale (4) et lesdites sections de rouleau latérales (3, 5), de manière que les axes de pivotement des dispositifs pivots soient décalés légèrement par rapport au plan vertical, vers l'un ou l'autre coté dudit plan, de manière à faciliter le basculement des sections de rouleau entre leurs positions de transport et leurs positions de travail et inversement.
